# EUROPEAN PATENT SPECIFICATION

(11) **EP 2 445 316 B1**
(45) Date of publication and mention of the grant of the patent: **21.11.2012**
(21) Application number: 11184908.9
(22) Date of filing: 12.10.2011
(51) Int. Cl.: H05B 33/08, H04N 13/04, H01J 61/90

(54) **Lighting device and illumination fixture using the same**
Beleuchtungsvorrichtung und Beleuchtungsbefestigung damit
Dispositif d'éclairage et accessoire d'éclairage l'utilisant

(30) Priority: 25.10.2010 JP 2010238401
(43) Date of publication of application: 25.04.2012
(73) Proprietor: Panasonic Corporation, Osaka 571-8501 (JP)
(72) Inventor: Esaki, Sana, Osaka (JP); Hiramatsu, Akinori, Nara (JP)
(74) Representative: Rüger, Barthelt & Abel

(56) References cited:
- WO-A1-03/003750
- US-A- 5 821 989
- US-A1- 2009 001 252

## Description

### [Field of the Invention]

The present invention relates to a lighting device and to an illumination fixture using the same.

### [Background Art]

Conventionally, a lighting device using a light-emitting diode (LED) as a light source has been used. In order to control the LED to be dimmed, a conventional lighting device performs: a PWM dimming to intermittently pause a LED current flowing to the LED at a low frequency of approximately 100Hz to several kHz; and an amplitude dimming to control an amplitude of the LED current. The PWM dimming adjusts, with use of a PWM signal, a period where the LED current is supplied to the LED (on-duty), adjusts an average value of a photo output (the LED current), and thereby controls the LED to be dimmed. The amplitude dimming adjusts a magnitude (the amplitude) of the LED current, adjusts an average value of a photo output (the LED current), and thereby controls the LED to be dimmed.

In addition, a LED dimming device that performs the amplitude dimming in a region where a dimming level is high and performs the PWM dimming in a region where the dimming level is low is provided (refer to Patent Literature 1).

Then, for the purpose of suppressing a flicker of the LED, in the performing of the PWM dimming synchronized with the PWM signal, it is preferred to set a frequency of the PWM signal (a PWM frequency) to 100Hz or more. When the PWM frequency is set to 100Hz or more, human eyes do not feel the flicker under an environment irradiated by the LED. However, in the case where the PWM frequency is set to 2kHz or more, since a time of turning to be on and off is short in a region where the dimming level is deep, the number of on-pulses of the switching element becomes hard to be minutely controlled, the number of on-pulses discretely varies, and accordingly a resolution of the dimming deteriorates. Moreover, a roar is caused by a transformer and the like. Accordingly, in the case where the PWM dimming performed, it is preferred to set the PWM frequency to 100Hz to 2kHz.

### [Conventional Technique Document]

### [Patent Literature]

[Patent Literature 1] JP 2009-123681 A

A stereoscopic 3D viewing system is disclosed in US 5 821 989 A. A CRT display is provided. Stereoscopic 3D shutter-type glasses are used to create a 3D impression for the spectator. A transmitter is used to synchronize the shutters of the glasses with the time-multiplexed images of the display.

### [Disclosure of the Invention]

### [Problems to be solved by the Invention]

A lighting device performing the PWM dimming is used for a room illumination and for an outdoor night illumination, and then a device, for example, a 3D television displaying a 3D vision (a stereoscopic vision) is provided within an irradiation range of the illumination. In this case, when a user wears 3D glasses that make the user watch a stereoscopic view of the vision, there occurs a problem that causes a flicker in eyesight of the user.

A basic principle for displaying the 3D vision artificially generates disparity by separately shooting an image for a left eye and an image for a right eye, and thereby making a viewer recognize the vision, depth, and stereoscopic effect.

For example, in the case of the 3D television, a frame sequential method for alternately displaying frame by frame the left eye vision reflected on the left eye and the right eye vision reflected on the right eye is employed. Specifically, the 3D grasses has a pair of lenses, one for the right eye and the other for the left eye, and has shutters for shielding transmissive surfaces of the respective lenses. Then, when the left eye vision is displayed, a sight of the right eye is shielded by the shutter of the 3D glasses to allow only the left eye watching the vision. On the contrary, when the right eye vision is displayed, a sight of the left eye is shielded by the shutter of the 3D glasses to allow only the right eye watching the vision. In this manner, the depth and stereoscopic effect of the vision can be recognized by synchronizing a timing of switching the frame of the 3D vision with a timing of opening and closing the right and left shutters of the 3D glasses with use of an infrared signal and the like.

Generally, the number of frames of the vision displayed by the 3D television at one second is 60 frames for the right and 60 frames for the left (60Hz) respectively, 120 frames in total. In addition, a shutter speed (a shutter frequency) at which the right and left shutters of the 3D glasses are alternately opened and closed is, for example, 25Hz, 30Hz, and 60Hz, which vary depending on a type and on a region.

For example, in the case where a light source is controlled by the PWM dimming with use of the PWM signal whose PWM frequency is 100Hz, the light source repeats the blinking at 100Hz. When the shutter of the 3D glasses repeats the opening and closing, for example, at the shutter speed of 60Hz (120Hz = 120 times at one second in total of the right and left) under the above-mentioned environment, the synchronization between the PWM frequency and the shutter speed cannot be achieved. That is, the timing when the light source blinks does not synchronized with the timing when the shutter is opened and closed, and accordingly when wearing the 3D glasses, the human eyes senses the flicker.

In addition, according to an experimental result, it has been found that in the case of performing the PWM dimming, the flicker is sensed even in a state where frequency components of the PWM frequency included in an outputted light is several % or less, that is, a dimmed state of almost the full lighting.

Moreover, since the shutter frequency varies depending on the type and on the region, the PWM frequency at which the flicker occurs will vary, and accordingly the PWM frequency is required to be individually set in each of the types and the regions.

The present invention is proposed in consideration of the above-mentioned reasons, and its purpose is to provide a lighting device and an illumination fixture using this, the lighting device being able to correspond to a plurality of 3D glasses each having a different shutter frequency and able to prevent the flicker from occurring in the wearing of the 3D glasses.

### [Means adapted to solve the Problems]

Alighting device of the present invention is used in a space where a 3D glasses having a shutter for alternately shielding each transmissive surface of a pair of lenses at any one shutter frequency of plural types of shutter frequencies, and includes: a lighting part for outputting a direct current to the light source; and a dimming part for turning on and off supply of the direct current to the light source at a predetermined PWM frequency, wherein the PWM frequency is an integral multiple of the least common multiple of the plural types of shutter frequencies.

In the lighting device, it is preferred that the PWM frequency is an even multiple of the least common multiple.

In the lighting device, it is preferred to include: a timing synchronization part for coinciding timing when supply of the direct current to the light source is turned on or off with timing when the shutter of the 3D glasses 8 is opened and closed.

An illumination fixture of the present invention includes: a lighting device used in a space where a 3D glasses having a shutter for alternately shielding each transmissive surface of a pair of lenses at any one shutter frequency of plural types of shutter frequencies, and including: a lighting part for outputting a direct current to the light source; and a dimming part for turning on and off supply of the direct current to the light source at a predetermined PWM frequency, wherein the PWM frequency is an integral multiple of the least common multiple of the plural types of shutter frequencies; and a light source lighted by the direct current outputted by the lighting device.

### [Effect of the Invention]

As explained above, the present invention has effects that realize the corresponding to the plurality of 3D glasses each having a different shutter frequency to prevent the flicker from occurring in the wearing of the 3D glasses.

### [Brief Description of the Drawings]

[Fig. 1] Fig. 1 is a circuit configuration view of a lighting device according to a first embodiment of the present invention.
[Fig. 2] Fig. 2 is a block diagram showing an internal configuration of a controlling integrated circuit of the above-mentioned device.
[Figs. 3 (a) and 3 (b)] Fig.3 (a) is a waveform diagram of a LED current and Fig.3 (b) is a waveform diagram of a PWM signal.
[Figs. 4 (a) and 4 (b)] Fig. 4 (a) is a waveform diagram of the LED current and Fig. 4 (b) is a waveform diagram of the PWM signal.
[Fig. 5] Fig 5 is a schematic configuration view showing appearance of 3D glasses.
[Fig. 6] Fig. 6 is a schematic configuration view showing appearance of an illumination fixture according to a second embodiment.

### [Best Mode for Carrying Out the Invention]

On the basis of drawings, embodiments of the present invention will be explained below.

### (First embodiment)

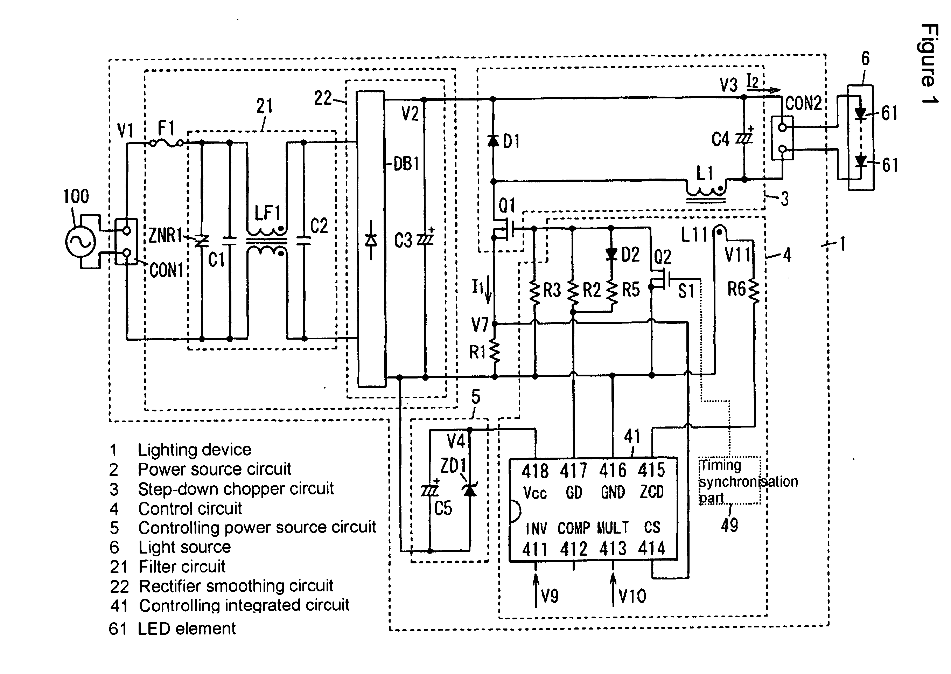

A circuit configuration view of a lighting device 1 according to the present embodiment is shown in Fig. 1.

The lighting device 1 according to the present embodiment includes: a power source circuit 2, a step-down chopper circuit 3, a control circuit 4, and a controlling power source circuit 5. Meanwhile, the step-down chopper circuit 3 is equivalent to a lighting part of the present invention, and the control circuit 4 is equivalent to a dimming part of the present invention.

In the lighting device 1, a power source is supplied from a commercial power source 100 (for example, 100V, 50/60Hz) via a connector CON1, the power source circuit 2 converts an alternating voltage V1 to generate a rectified voltage V2. In addition, to the step-down chopper circuit 3, a light source 6 is connected via a connector CON2. The light source 6 according to the present embodiment includes one or a plurality of semiconductor light-emitting elements 61 (LED elements 61). Meanwhile, the light source 6 may include a LED module in which the plurality of LED elements 61 are connected in series, in parallel, or in series and parallel. In addition, the LED element 61 is employed as the semiconductor light-emitting element in the present embodiment; however, an organic EL element and a semiconductor laser element may be employed.

And, the control circuit 4 is able to control the light source 6 to be dimmed by controlling an output current of the step-down chopper circuit 3 on the basis of a PWM signal S1.

Detailed configurations of the respective parts will be explained below.

The power source circuit 2 includes: a fuse F1, a filter circuit 21, and a rectifier smoothing circuit 22.

To the filter circuit 21, the alternating voltage V1 is supplied from the commercial power source 100 via the connector CON 1 and the fuse F1. The filter circuit 21 includes: a surge voltage absorbing element ZNR1, capacitors C 1 and C2, and a common mode choke coil LF1, and removes the noise of alternating voltage V1 supplied from the commercial power source.

The rectifier smoothing circuit 22 includes: a full-wave rectifier DB1 and a smoothing capacitor C3, and generates the rectified voltage V2 between both ends of the smoothing capacitor C3 by rectifying and smoothing the alternating voltage V1. Additionally, the rectifier smoothing circuit 22 may include a power factor improvement circuit using a step-up chopper circuit.

Meanwhile, the power source circuit 2 has a commonly-known circuit configuration, and accordingly detailed explanations of the circuit are omitted.

Next, the step-down chopper circuit 3 will be explained.

The step-down chopper circuit 3 includes: an inductor L1, a switching element Q1 including an n-channel MOSFET, a diode D1, and a capacitor C4 including an electrolytic capacitor. A series circuit including: the capacitor C4, the inductor L1, the switching element Q1, and a resistance R1 is connected between output terminals of the rectifier smoothing circuit 22, the diode D1 is connected to the capacitor C4 and the inductor L1 in parallel.

In addition, between both ends of the capacitor C4, the light source 6 is connected via the connector CON2.

When the switching element Q 1 is turned on, a direct current I1 for charging the capacitor C4 flows from the rectifier smoothing circuit 22, and thus the capacitor C4 is charged. When the switching element Q1 is turned off, the direct current I1 does not flow, and thus the capacitor C4 discharges. In this manner, when the switching element Q1 alternately repeats the turning on and off and thus the capacitor C4 repeats the charge and discharge, the rectified voltage V2 is stepped down and a capacitor voltage V3 is generated between both ends of the capacitor C4. Then, a LED current I2 is supplied to the light source 6 with used of the capacitor voltage V3 as a power source.

The control circuit 4 controls the switching element Q 1 to be switched, and thereby controls the LED current 12 to control the light source 6 to be dimmed. The control circuit 4 includes: a controlling integrated circuit 41 and peripheral circuits.

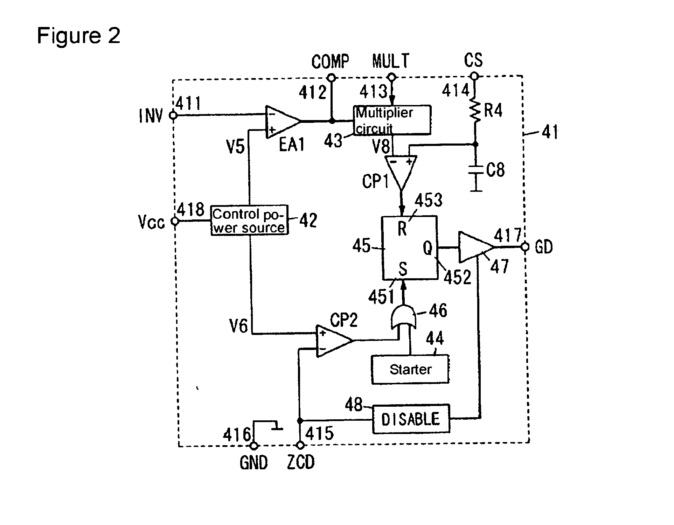

An internal configuration of the controlling integrated circuit 41 is shown in Fig. 2.

An INV pin 411 is connected to an inverting input terminal of a built-in error amplifier EA1 (an error amplifier). A COMP pin 412 is connected to an output terminal of the error amplifier EA1. An MULT pin 413 is connected to an input terminal of the multiplier circuit 43. A CS pin 414 serves as a chopper current detection terminal. A ZCD pin 415 serves as a zero-cross detection terminal. A GND pin 416 serves as a ground terminal. A GD pin 417 serves as a gate drive terminal. A Vcc pin 418 serves as a power source terminal.

When a controlling power source voltage V4 of a predetermined voltage or more is applied between the Vcc pin 418 and the GND pin 416, reference voltages V5 and V6 are generated by a built-in control power source 42. Then, each circuit in the controlling integrated circuit 41 is ready to operate.

Additionally, in the present embodiment, the controlling power source circuit 5 in which a capacitor C5 and a Zener diode ZD1 are connected in parallel each other is provided, a controlling power source voltage V4 that is set as a Zener voltage of the Zener diode ZD 1 is generated. As a simple configuration, a high resistance not shown in the drawing is connected between a positive electrode of the capacitor C3 and a positive electrode of the capacitor C5, and the rectified voltage V2 outputted by the rectifier smoothing circuit 22 is used for an input of the controlling power source circuit 5.

When the controlling power source voltage V4 is applied to the controlling integrated circuit 41, a starter 44 firstly outputs a start pulse to a set input terminal 451 (a S terminal) of a flip-flop 45 via an OR gate 46. Then, an output level of an output terminal 452 (a Q terminal) of the flip-flop 45 becomes a high level. And then, an output level of the GD pin 417 also becomes a high level via a driving circuit 47.

Between the GD pin 417 and the ground, a series circuit of R2 and R3 is connected, and a connection point between the resistance R2 and the resistance R3 is connected to a gate of the switching element Q1. Accordingly, when an output level of the GD pin 417 becomes the high level, a resistance divided value due to the resistances R2 and R3 is applied between the source and gate of the switching element Q1, and the switching element Q1 is turned on. Meanwhile, the resistance R1 is a resistance that is used for a current detection and that has a small resistance value, and accordingly scarcely affects the voltage applied between the gate and source.

When the switching element Q 1 is turned on, the direct current I1 flows from the rectifier smoothing circuit 22 in a path of the capacitor C4, the inductor L1, the switching element Q1, and the resistance R1. On this occasion, unless the inductor L1 is magnetically saturated, the direct current I1 flowing to the inductor L1 substantially linearly rises. In addition, the resistance R1 is a detection resistance of the direct current I1 in a period when the switching element Q1 is turned on, a both-end voltage V7 of the resistance R1 is outputted to the CS pin 414 of the controlling integrated circuit 41 as the detection signal of the direct current I1.

Then, a voltage V7 inputted to the CS pin 414 is applied to a non-inverting input terminal of a comparator CP1 via a noise filter including the resistance R4 and a capacitor C8. Meanwhile, in the present embodiment, the resistance R4 is configured to be 40kΩ, and the capacitor C8 is configured to be 5pF. A reference voltage V8 is applied to the non-inverting input terminal of the comparator CP1. The reference voltage V8 is an output voltage of a multiplier circuit 43, and is determined on the basis of: a voltage V9 applied to the INV pin 411 and a voltage V10 applied to a MULT pin 413.

When the direct current I1 flowing to the inductor L1 reaches a predetermined value or more and thus the both-end voltage V7 of the resistance R1 reaches the reference voltage V8 or more, an output level of the comparator CP1 becomes a high level, and accordingly the signal of high level is inputted to the set input terminal 453 (a R terminal) of the flip-flop 45. Then, the output level of the output terminal 452 (the Q terminal) of the flip-flop 45 becomes a low level. When the output level of the output terminal 452 (the Q terminal) becomes the low level, an output level of the driving circuit 47 also becomes the low level to operate so as to withdraw an electric current from the GD pin 417. A series circuit of the diode D2 and resistance R5 is connected in parallel with the resistance R2, the driving current 47 withdraw an electric charge between the source and gate of the switching element Q 1 via the diode D2 and the resistance R5, and thereby the switching element Q 1 is quickly turned off.

When the switching element Q1 is turned off, a regeneration current flows via the diode D 1 due to the electromagnetic energy accumulated in the inductor L1, and thus the capacitor is discharged. On this occasion, the both-end voltage of the inductor L1 is clamped at the voltage V3 between both ends of the capacitor C4. When an inductance of the inductor L1 is L1a, the regeneration current flowing to the inductor L1 decreases at a substantially constant slope (di/dt ≈ -V3/L1a).

In the case where the capacitor voltage V3 generated between both ends of the capacitor C4 is high, the regeneration current rapidly attenuates, and in the case where the capacitor voltage V3 is low, the regeneration current attenuates slowly. That is, even if a peak value of the regeneration current flowing to the inductor L1 is constant, a time until the regeneration current disappears will vary depending on a load voltage. The higher the capacitor voltage V3 is, the shorter the required time is, and the lower the capacitor voltage V3 is, the longer the required time is.

In addition, during a period where the regeneration current flows, a secondary voltage V1 1 based on the slope of the regeneration current is generated between both ends of a secondary wiring L11 of the inductor L1, and the secondary voltage V11 is outputted to the ZCD pin 415 as a detection signal of the regeneration current via the resistance R6. When the regeneration current finishes flowing, the secondary voltage V11 1 becomes zero.

An inverting input terminal of a comparator CP2 for a zero-cross detection is connected to the ZDC pin 415. Additionally, the reference voltage V6 is applied to a non-inverting input terminal of the comparator CP2. Then, when the regeneration current is decreased and the secondary voltage V1 1 becomes the reference voltage V6 or less, the output level of the comparator CP2 becomes the high level, and a signal of the high level is outputted to the set input terminal 451 (the S terminal) of the flip-flop 45 via the OR gate 46. And, the output level of the output terminal 452 (the Q terminal) of the flip-flop 45 becomes the high level, the output level of the GD pin 417 becomes the high level, and thus the switching element Q 1 is turned on.

In this manner, due to the repetition of the above-described operations, the switching element Q1 is turned on and off, the capacitor voltage V3 obtained by stepping down the rectified voltage V2 is generated between both ends of the capacitor C4, and the LED current I2 supplied to the light source 6 is controlled to a constant current. In addition, the lighting source 6 is configured by connecting the plurality of LED elements 61 in series, and when a forward voltage of the LED element 61 is Vf and the number of the LED elements 61 connected in series is n, the capacitor voltage V3 is clamped at substantially Vf × n.

Next, the dimming control of the lighting source 6 will be explained.

In accordance with the low-frequency PWM signal S1 transmitted from, for example, a dimmer not shown in the drawing, the lighting device according to the present embodiment performs the intermittent control for intermittently stop the high-frequency chopper operation, and thereby supplies the LED current I2 based on a duty of the PWM signal S 1 to the light source 6 to dim the light source.

The switching element Q2 including the n-channel MOSFET is connected between the gate terminal of the switching element Q 1 and the ground, and the PWM signal S 1 is outputted to the gate terminal of the switching element Q2.

The PWM signal S1 is a low-frequency rectangular wave voltage signal whose PWM frequency is, for example, approximately 100Hz to 2kHz, and is configured so that as the low-level period in one cycle becomes long, the dimming level can be large. The PWM signal S1 of this type is widely used for a dimming lighting device such as a fluorescent lamp.

In the case where the PWM signal S 1 is in the high level, the switching element Q2 is turned on, and thus the gate terminal of the switching element Q 1 and the ground are short-circuited. That is, in the case where the PWM signal S1 is in the high level, the off-state of the switching element Q 1 is maintained regardless of the output level of the GD pin 417, and the chopper operation (the switching operation of the switching element Q1) stops. In the chopper operation stopping period, since the direct current I1 is not supplied from the rectifier smoothing circuit 22 toward the capacitor C4, the capacitor C4 is discharged, and accordingly the capacitor voltage V3 is decreased.

In the case where the PWM signal S 1 is in the low level, the switching element Q2 is turned off (a high impedance state). That is, in the case where the PWM signal S 1 is in the low level, a normal chopper operation for turning on and off the switching element Q 1 in accordance with the output level of the GD pin 417 is performed. In the chopper operation period, since the switching element Q1 is turned on and off, the capacitor voltage V3 is generated between both ends of the capacitor C4 to supply the LED current I1 to the light source 6.

Accordingly, a ratio between the chopper operation period and the chopper operation stopping period coincides with a ratio between the low level period and high level period of the PWM signal S1 (the duty ratio). In the chopper operation period T1, since the capacitor voltage V3 is increased, the LED current I2 is increased, and in the chopper operation stopping period T2, since the capacitor voltage V3 is decreased, the LED current I2 is decreased. Specifically, the LED current I2 based on a ratio of the low level to one cycle T0 of the PWM signal S1 is supplied to the light source 6. That is, by varying the duty ratio of the PWM signal S2, the light source 6 can be controlled to be dimmed (the PWM dimming).

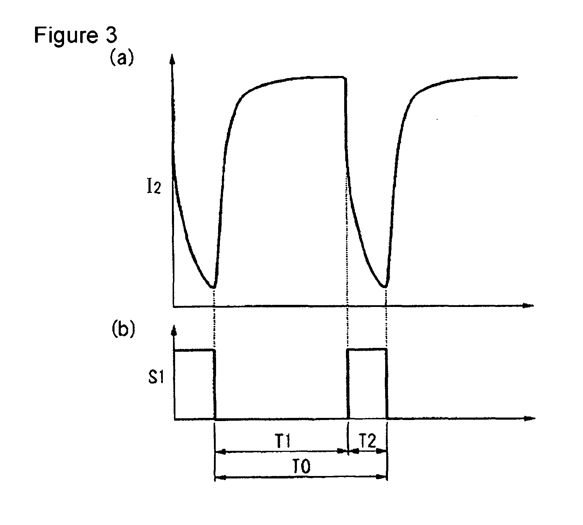

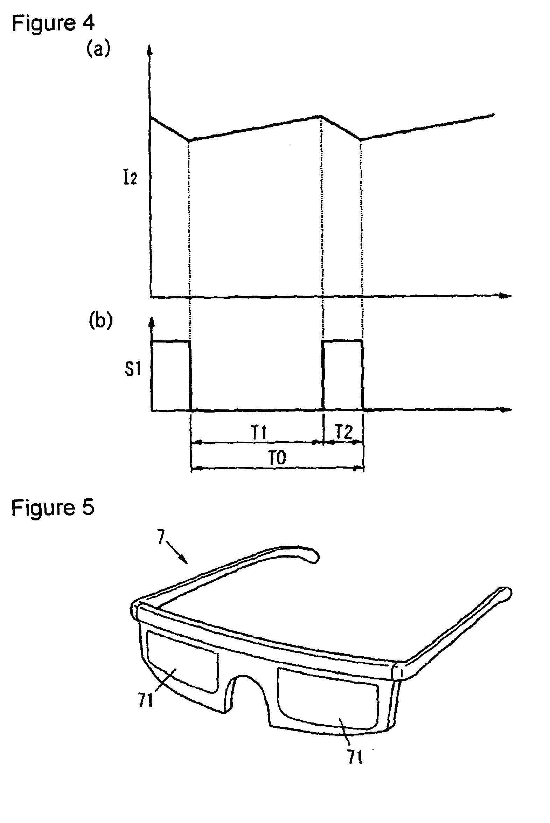

Meanwhile, in the case where the PWM frequency is constant, a ripple of the LED current I2 supplied to the light source 6 is determined on the basis of a capacity of the capacitor C4. As shown in Fig. 3, the capacity of the capacitor C4 is small, the LED current I2 in the period T1 where the chopping operation stops rapidly attenuates. However, as shown in Fig. 4, in the case where the capacity of the capacitor C4 is large, even in the period T1 where the chopping operation stops, the LED current I2 attenuates slowly, and accordingly the ripple of the LED current I2 becomes small.

Next, a schematic configuration view of the 3D glasses 7 is shown in Fig. 5.

The 3D glasses 7 is used for a device, for example, a 3D television displaying a 3D vision (a stereoscopic vision), and when wearing the glasses, a user can watch a stereoscopic view of the vision. The 3D glasses 7 according to the present embodiment corresponds to the 3D vision of the frame sequential method, which includes a pair of lenses 71 for a right eye and left eye, and each lens 71 has a shutter for blocking a sight by shielding the transmissive surface. Then, when the vision for the left eye is displayed on the 3D television, the shutter of the lens 71 for right eye is closed to block the sight of right eye. On the centrally, when the vision for the right eye is displayed on the 3D television, the shutter of the lens 71 for left eye is closed to block the sight of left eye. In this manner, the depth and stereoscopic effect of the vision can be recognized by synchronizing the timing when the frame of the 3D vision is switched with the timing when the right and left shutters of the 3D glasses 7 are alternately opened and closed with use of the infrared signal and the like.

The shutter speed (the shutter frequency) at which the shutter of the lens 71 of the 3D glasses 7 is opened and closed is different depending on the type and region. For example, the shutter speed is 25Hz in EU, 30Hz in US, 60Hz in Japan.

In the case where the lighting device 1 according to the present embodiment is used in a space where the above-mentioned 3D glasses 7 is used, the lighting device according to the present embodiment sets the PWM frequency to 300Hz that is the least common multiple of the above-mentioned three types of shutter speeds (25Hz, 30Hz, and 60Hz). In this manner, since an integral multiple of each shutter speed coincides with the PWM frequency, the flicker can be prevented even in the case of wearing any one of the plurality of 3D glasses 7 each having different shutter speeds.

In addition, even when the PWM frequency is set to an integral multiple (600Hz, 900Hz, 1200Hz, ···)of the least common multiple (300Hz) of the shutter speeds, the same effect as the above-mentioned effect can be obtained. Meanwhile, when the PWM frequency becomes high, the inductor L1 generates the roar, and accordingly it is preferable for the PWM frequency to be low.

The lighting device according to the present embodiment can correspond to the plurality of 3D glasses 8 each having different shutter speeds, does not require the PWM frequency to be set individually in each of the types and of the regions, can be used in common, and accordingly can reduce a cost.

In addition, it was obtained from an experimental result that when the PWM frequency is set to an even multiple (600Hz, 1200Hz, ···) of the least common multiple (300Hz) of the shutter speeds, the flicker in wearing the 3D glasses can be further reduced. This is because the number of blinking of the light sources 6 in a period when the shutter is opened is the same in both of the right and the left.

Meanwhile, the shutter speed is not limited to the above-mentioned (25Hz, 30Hz, and 60Hz), and may be different shutter speed, and when the PWM frequency is set to an integral multiple of the least common multiple of the plurality types of shutter speeds, the same effect as the above-mentioned effect can be obtained.

Additionally, as shown in Fig. 1 by a broken line, a timing synchronization part 49 for coinciding the timing where the chopper operation starts or stops with the timing where the shutter of the 3D glasses 8 is opened and closed may be included. For example, the lighting device according to the present embodiment is used as a lighting device for lighting the light source 6 attached to the 3D television, and the timing synchronization part 49 receives the infrared signal transmitted from the 3D television, the infrared signal instructing the timing when the shutter of the 3D glasses 7 is opened and closed. Then, the timing synchronization part 49 determines the timing when the chopper operation is started or stopped on the basis of the infrared signal. In this manner, the timing when the chopper operation is started or stopped can coincide with the timing when the shutter of the 3D glasses 7 is opened and closed, and thus the flicker in wearing the 3D glasses 7 can be further reduced.

In addition, the controlling power source circuit 5 according to the present embodiment generates the controlling voltage V4 with use of the rectifier voltage V2; however, the controlling voltage V4 may be generated by using the secondary voltage V11 generated between both ends of the secondary wiring L11 of the inductor L1. By charging the capacitor C7 in the chopper operation with use of the secondary voltage V11, an electric power efficiency can be improved.

Moreover, in the present embodiment, the timing when the regeneration current flowing to the inductor L1 becomes substantially zero is detected by detecting the both-end voltage V11 of the secondary wiring L11 of the inductor L1;however, the method is not limited to the above-mentioned method. That may be a method able to detect the timing when the regeneration current disappears, for example, a method for detecting the rising of a reverse direction voltage of the diode D 1 and a method for detecting the stepping-down of the voltage between the drain and source of the switching element Q1.

Furthermore, in the present embodiment, only the PWM dimming for controlling the direct current I1 in the PWM control is performed; however, even in the case of combining the amplitude dimming for controlling the amplitude of the direct current I1 with the PWM dimming, the same effect as the above-mentioned effect can be obtained. Meanwhile, in the present embodiment, by controlling the voltages V9 and V10 applied to the INV pin 411 or to the MULT pin 413 of the controlling integrated circuit 41, the current flowing to the switching element Q 1 can be controlled, and the amplitude dimming for controlling the amplitude of the direct current I1 can be performed.

Then, in the internal configuration of the controlling integrated circuit 41 shown in Fig. 2, DISABLE 48 has a function to stop the driving circuit 47 due to application of a predetermined voltage to the ZCD pin 415.

### (Second embodiment)

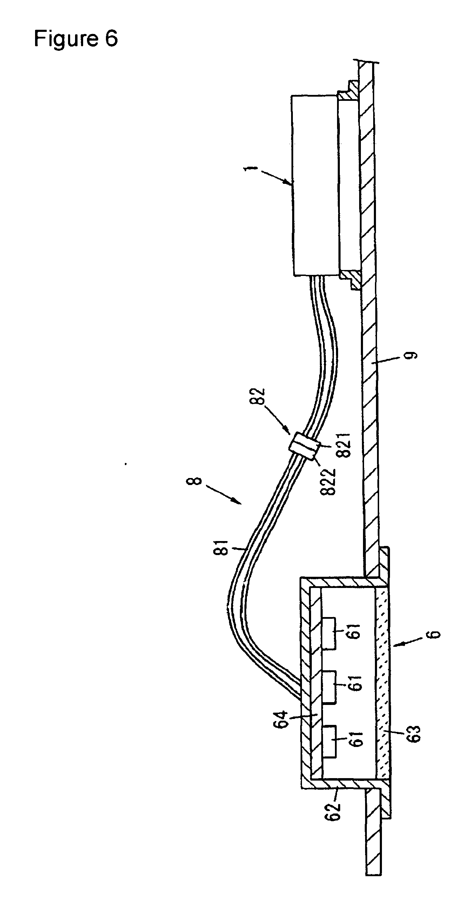

An illumination fixture 8 according to the present embodiment includes the lighting device 1 and the light source according to the first embodiment. Fig. 6 shows a schematic cross-section view of the illumination fixture 8.

In the illumination fixture 8 according to the embodiment, the light source 6 and the lighting device 1 serving as a power source unit are separately configured, and is electrically connected each other by using the lead lines 11 and 65. When the lighting device 1 and the light source 6 are separately configured, the light source 6 can be formed to be thin. Moreover, a degree of freedom of an installation site of the lighting device 1 is improved.

The light source 6 is a LED module including: the LED elements 61, a fixture chassis 62, a light diffraction plate 63, and an installation substrate 64, and is embedded so that one surface is exposed from a ceiling 9.

The fixture chassis 62 is formed of a metallic cylindrical body whose one surface is opened, and the opening is covered with the light diffraction plate 63. In addition, the installation substrate 64 is attached on a bottom surface of the fixture chassis 62 opposed to the light diffraction plate 63. Then, the plurality of LED elements 61 are installed on one surface of the installation substrate 64, and the light irradiated by the LED elements 61 is diffracted by the light diffraction plate 63 to be irradiated toward a floor surface.

Since being separately configured from the light source 6, the lighting device 1 can be installed on a position separated from the light source 6, and in the present embodiment, the lighting device 1 is installed on a reverse surface of the ceiling 9. Then, the output of the step-down chopper circuit 3 of the lighting device 1 is connected to the light source 6 via the lead line 81 and the connector 82, and the LED current I2 is supplied to the light source 6. In the connector 82, a connector 821 on the lighting device 1 side and a connector 822 on the light source 6 side are configured so as to be freely detachable, and the lighting device 1 and the light source 6 can be separated from each other in the maintenance.

Since having the lighting device 1 explained in the first embodiment, the illumination fixture 8 according to the embodiment can correspond to the plurality of 3D glasses 7 each having different shutter speed and can prevent the flicker in wearing the 3D glasses 7.

Meanwhile, in the present embodiment, the lighting device 1 and the light source 6 are separately configured; however, the lighting device 1 and the light source 6 may be integrally configured.

### [Description of Reference Numerals]

- 1: Lighting device
- 2: Power source circuit
- 3: Step-down chopper circuit
- 4: Control circuit
- 5: Controlling power source circuit
- 6: Light source
- 21: Filter circuit
- 22: Rectifier smoothing circuit
- 41: Controlling integrated circuit
- 61: LED element

## Claims

1. A lighting device used in a space where a 3D glasses having a shutter for alternately shielding each transmissive surface of a pair of lenses at any one shutter frequency of plural types of shutter frequencies is used, comprising:
a lighting part for outputting a direct current to the light source; and
a dimming part for turning on and off supply of the direct current to the light source at a predetermined PWM frequency, wherein
the PWM frequency is an integral multiple of the least common multiple of the plural types of shutter frequencies.

2. The lighting device according to claim 1, wherein
the PWM frequency is an even multiple of the least common multiple.

3. The lighting device according to claim 1 or 2, comprising:
a timing synchronization part for coinciding a timing when supply of the direct current to the light source is turned on or off with a timing when the shutter of the 3D glasses 8 is opened and closed.

4. The illumination fixture comprising:
the lighting device according to any one of claims 1 to 3; and
a light source lighted by the direct current outputted by the lighting device.

## Patentansprüche

1. Beleuchtungseinrichtung zur Verwendung in einem Raum, in dem eine 3D-Brille mit einem Verschluss verwendet wird, der abwechselnd jede lichtdurchlässige Oberfläche eines Linsenpaares mit einer Verschlussfrequenz aus einer Mehrzahl von Verschlussfrequenzen abschirmt, aufweisend:
einen Beleuchtungsteil, der einen Gleichstrom für die Lichtquelle bereitstellt;
und einen Dimmteil, um die Abgabe des Gleichstroms an die Lichtquelle mit einer vorgegebenen PWM-Frequenz ein- und auszuschalten, wobei
die PWM-Freguenz ein ganzzahliges Vielfaches des kleinsten gemeinsamen Vielfachen der Mehrzahl von Verschlussfrequenzen ist.

2. Beleuchtungseinrichtung nach Anspruch 1, wobei die PWM-Frequenz ein geradzahliges Vielfaches des kleinsten gemeinsamen Vielfachen ist.

3. Beleuchtungseinrichtung nach Anspruch 1 oder 2, aufweisend:
einen Zeitsteuersynchronisationsteil, um die Zeitsteuerung für das Ein- und Ausschalten der Einspeisung des Gleichstromes in die Lichtquelle mit einer Zeitsteuerung beim Öffnen und Schließen des Verschlusses der 3D-Brille in Einklang zu bringen.

4. Beleuchtungsvorrichtung aufweisend:
die Beleuchtungseinrichtung nach einem der Ansprüche 1 bis 3;
und eine Lichtquelle, die durch den von der Beleuchtungseinrichtung abgegebenen Gleichstrom zum Leuchten gebracht wird.

## Revendications

1. Dispositif d'éclairage utilisé dans un espace ou sont utilisées des lunettes 3D comportant un obturateur pour couvrir alternativement chaque surface transmissive d'une paire de lentilles à n'importe quelle fréquence d'obturateur parmi plusieurs types de fréquences d'obturateur, comprenant :
une partie d'éclairage pour délivrer un courant continu à la source de lumière ; et
une partie de gradation pour ouvrir et fermer l'alimentation du courant continu fourni à la source de lumière à une fréquence de MLI prédéterminée, dans lequel
la fréquence de MLI est un multiple entier du plus petit multiple commun des différents types de fréquences d'obturateur.

2. Dispositif d'éclairage selon la revendication 1, dans lequel la fréquence de MLI est un multiple pair du plus petit multiple commun.

3. Dispositif d'éclairage selon la revendication 1 ou 2, comprenant :
une partie de synchronisation de minutage pour faire coïncider un minutage quand l'alimentation du courant continu fourni à la source de lumière est ouverte ou fermée avec un minutage quand l'obturateur des lunettes 3D 8 est ouvert et fermé.

4. Installation d'éclairage comprenant :
le dispositif d'éclairage selon l'une quelconque des revendications 1 à 3 ; et
une source de lumière allumée par le courant continu délivré par le dispositif d'éclairage.
